Europäisches Patentamt

European Patent Office

Office européen des brevets

(11) Publication number: **0 352 573**
**A1**

## (12) EUROPEAN PATENT APPLICATION

(21) Application number: **89112997.5**

(22) Date of filing: **14.07.89**

(51) Int. Cl.⁴: **H02K 21/46 , H02K 1/27**

(30) Priority: **27.07.88 US 224642**

(43) Date of publication of application:
**31.01.90 Bulletin 90/05**

(84) Designated Contracting States:
**CH DE FR GB LI SE**

(71) Applicant: **Siemens Aktiengesellschaft**
**Wittelsbacherplatz 2**
**D-8000 München 2(DE)**

(72) Inventor: **Wagner, Paul D.**
**13801 Rivercrest Drive**
**Little Rock Arkansas 72212(US)**
Inventor: **Gleghorn, Linn, R.**
**1008 Dogwood Court**
**Lansdale Pennsylvania 19446(US)**

(54) **Synchronous machine rotor lamination.**

(57) A rotor lamination for a permanent magnet synchronous machine. The rotor lamination can be used for a two, four or eight pole synchronous machine. The orientation of the permanent magnets determines the number of poles of the machine. The lamination can also include openings adapted to contain conductors used to bring a synchronous motor up to synchronous speed as an induction motor.

FIG 3

# SYNCHRONOUS MACHINE ROTOR LAMINATION

## BACKGROUND OF THE INVENTION

This invention relates to a synchronous machine. More particularly, this invention relates to a rotor lamination for a multi-pole permanent magnet synchronous machine.

A synchronous motor is a synchronous machine which is characterized by its ability to run at a constant speed which is independent of motor load. The constant speed of the motor is dependent upon the frequency of the motor current and the number of motor poles. Therefore, for a given frequency current, the motors constant speed is dependent upon the number of motor poles.

For many applications the frequency of the motor current is 60 Hz which corresponds to the frequency of the power supplied by utilities. (50 Hz for many European countries.) Synchronous motors are manufactured having a number of poles corresponding to a desired constant operating speed. For example, at 60 Hz a 2 pole machine will operate at 3600 rpm, a 4 pole machine at 1800 rpm and an 8 pole machine at 900 rpm. To obtain very specialized speeds, the frequency and pole number can be varied. For example, to obtain a speed of 2040 rpm 68 Hz current and 4 poles could be used.

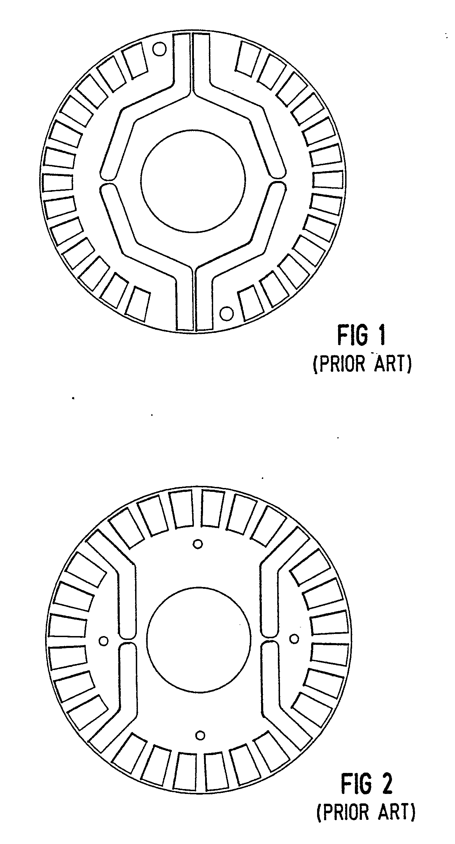

Referring to the drawings, Fig. 1 illustrates a rotor lamination for a 2 pole permanent magnet motor and Fig. 2 illustrates a rotor lamination for a 4 pole machine. Presently, different rotor laminations are used to produce permanent magnet motors having differing numbers of poles. As a result, different tooling is required to produce the different rotor laminations for motors having differing numbers of poles. Thus, for a manufacturer producing 2, 4 and 8 pole motors, three different types of lamination producing dies are required.

Accordingly, it would be desirable to have a rotor lamination which could be used universally in 2, 4 and 8 pole machines.

## BRIEF DESCRIPTION OF THE INVENTION

One object of the invention is to provide a universal rotor lamination useable with a permanent magnet synchronous machine having differing numbers of poles.

An advantage of the present invention is the ability to use the rotor lamination for synchronous machines having 2, 4 and 8 poles. This ability eliminates the cost of tooling and/or retooling required when laminations for machines having differing numbers of poles are required.

Another advantage of the present invention is that the rotor lamination may be configured such that all of the permanent magnets used in the motor are of the same size.

Accordingly, there is provided a rotor lamination for a synchronous machine comprising a piece of lamination material. The lamination includes an opening adapted to accept the machine shaft, at least four radially extending openings each adapted to contain a magnet, and at least eight interior openings each adapted to contain a magnet. Each opening defines a longitudinal axis, wherein the longitudinal axis of each interior opening intersects with the longitudinal axis of the interior openings it is adjacent to.

## BRIEF DESCRIPTION OF THE DRAWINGS

Fig. 1 illustrates a prior art rotor lamination for a two-pole motor;

Fig. 2 illustrates a prior art rotor lamination for a four-pole motor;

Fig. 3 illustrates a rotor lamination useable in a 2, 4 or 8 pole machine;

Fig. 4 illustrates the orientation of the rotor magnets for a 2 pole machine;

Fig. 5 illustrates the orientation of the rotor magnets for a 4 pole machine; and

Fig. 6 illustrates the orientation of the rotor magnets for an 8 pole machine.

## DETAILED DESCRIPTION OF THE PREFERRED EMBODIMENT

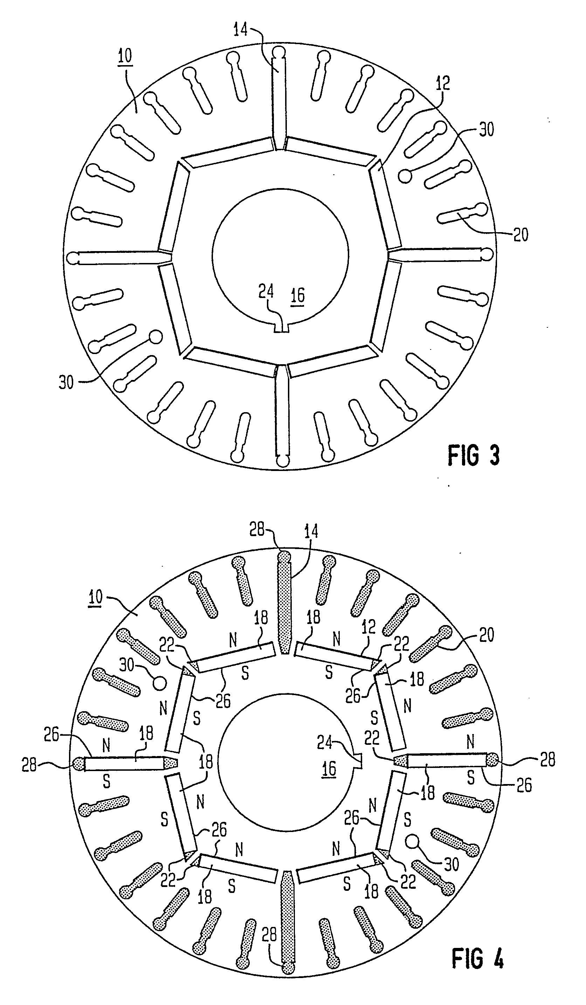

Turning now to the drawings, Fig. 3 illustrates the preferred embodiment of the rotor lamination. This lamination is used for 2, 4 or 8 pole machines and may be either stamped or laser cut from an appropriate lamination material. The openings 12 and 14 are adapted to contain permanent magnets and the opening 16 is adapted to accept the machine shaft. By way of example, the permanent magnets 18 may be fabricated from materials such as barium or strontium ferrites, commonly known as ceramic magnets, or samarium cobalt commonly known as rare earth magnets. Additionally, the magnets 18 can all be fabricated having the same shape and size since the preferred embodiment is configured so that all the magnet openings 12, 14 are adapted to accept magnets of the same size. The relationship between the polarity of the magnets 18 in the openings 12, 14 determines whether the machine will be 2, 4 or 8 poles.

The embodiment of the rotor lamination 10 illustrated in Figs. 3-6 is configured for use in a synchronous motor. The lamination 10 includes a plurality of induction conductor openings 20 adapted to contain a conductive material. These openings 20 are located as close as practical to the periphery of the lamination. The lamination 10 also includes a circular shaft opening 16 with a key-way 24 adapted to cooperate with a key to prevent rotation of the laminations 10 relative to the motor shaft.

The openings 20 are provided for conductive material so that the motor can be brought up to synchronous speed from stand still as an induction motor. The conductors contained in the openings 20 also serve to dampen oscillations about a motor's synchronous speed. By way of example, the conductors can be fabricated from a conductive and non-magnetic material such as aluminum.

The lamination 10 also includes four radially extending openings 14 and eight interior openings 12, each opening 12, 14 includes a magnet portion 26 adapted to contain a magnet 18 having a substantially rectangular cross-section. The magnet portions 26 all have the same size and shape. The openings 12 are arranged such that the magnets 18 in the openings 12 are as close to the air gap (periphery of the rotor) as possible, while also maintaining the largest magnet portions 26 possible.

The holes 30 in the lamination 10 serve as alignment holes for stacking laminations 10 and then fastening the laminations 10 together before die casting.

Fig. 4 illustrates the configuration of the magnets 18 wherein the rotor is set up for a two pole synchronous machine. All of the darkened openings 22, 28, 20 are filled with aluminum. The aluminum in the tip portions 22 functions to fix the magnets 18 in position and, more importantly, to increase the reluctance of the rotor at the location of the tip portions 22 so that the magnetic flux of the magnets is better directed from one pole to the other via the air gaps. The openings 14 include conductor portions 28 filled with aluminum which serves to fix the magnets 18 in position and provide for a conductive path near the air gap. The openings 14 also include a portion 20 filled with aluminum which also serves to fix the magnets 18 in position and to increase the reluctance of the rotor at the location of the portion 28 so that the flux of the magnets 18 is better directed.

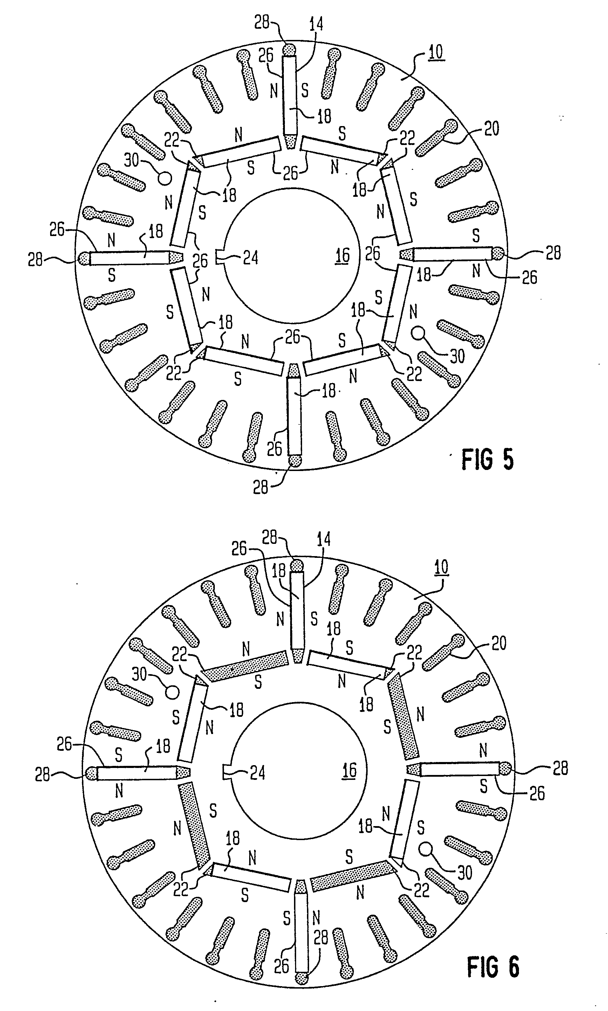

Fig. 5 illustrates the configuration of the magnets 18 wherein the rotor is set up for a four pole synchronous machine and Fig. 6 illustrates the configuration of the magnets 18 such that the rotor is set up for an eight pole synchronous machine. The configuration of Fig. 5 requires two more magnets 18 than the configuration in Fig. 4 since the openings 14 at the poles of the two pole rotor contain conductors. The configuration of Fig. 6 only uses four of the eight openings 12 to produce the proper magnetic field for an eight pole rotor.

While one embodiment the lamination and several modifications thereof have been shown and described in detail herein, various other changes and modifications may be made without departing from the scope of the present invention. For example, the rotor lamination could be used for a synchronous generator. By way of another example, the conductor portions 28 could be eliminated and the openings 20 located on a smaller radius so that the diameter of the rotor lamination can be reduced even though the same die is used to punch the openings 12, 14.

## Claims

1. A rotor lamination for a synchronous machine comprising a circular piece of lamination material defining:
an opening adapted to accept the machine shaft;
at least four radially extending openings each adapted to contain a magnet; and
at least eight interior openings each adapted to contain a magnet, each opening defining a longitudinal axis, wherein the longitudinal axis of each interior opening intersects with the longitudinal axis of the interior openings it is adjacent to.

2. The lamination of claim 1, wherein the radially extending openings each define a first conductor portion, the first conductor portion being adapted to contain conductor material.

3. The lamination of claim 2, wherein the interior openings each define a tip portion, the tip portion being adapted to contain conductor material.

4. The lamination of claim 1, wherein the radially extending openings and interior openings each define a portion adapted to contain a magnet having a substantially rectangular cross-section, all of the portions having the same size and shape.

5. The lamination of claim 4, further defining a plurality of induction conductor openings adapted to contain a conductive material.

6. The lamination of claim 5, further defining a plurality of alignment openings.

7. A rotor lamination for a synchronous motor defining:
a substantially circular shaft opening adapted to accept the motor shaft;
a plurality of induction conductor openings adapted to contain a conductive material;

at least four radially extending openings each opening including a magnet portion adapted to contain a magnet having a substantially rectangular cross-section, wherein the magnet portions have the same size and shape;

at least eight interior openings each opening defining a longitudinal axis and including a magnet portion adapted to contain a magnet having a substantially rectangular cross-section, the magnet portions having the same size and shape, wherein each longitudinal axis is tangent to the periphery of one circle which is concentric with the motor shaft.

8. The lamination of claim 7, wherein the radially extending openings each define a first conductor portion, the first conductor portion being adapted to contain conductor material.

9. The lamination of claim 8, wherein the interior openings each define a tip portion, the tip portion being adapted to contain conductor material.

10. The lamination of claim 9, further defining a plurality of alignment openings.

11. A rotor lamination for a synchronous motor defining:

a center;

a plurality of induction conductor openings adapted to contain a conductive material;

at least four radially extending openings each opening including a magnet portion adapted to contain a magnet having a substantially rectangular cross-section, wherein the magnet portions have the same size and shape;

at least four interior openings each opening defining a longitudinal axis and including a magnet portion adapted to contain a magnet having a substantially rectangular cross-section, the magnet portions having the same size and shape, wherein the longitudinal axes intersect to form a first square having a center corresponding to the center of lamination; and

at least four interior openings each opening defining a longitudinal axis and including a magnet portion adapted to contain a magnet having a substantially rectangular cross-section, the magnet portions having the same size and shape, wherein the longitudinal axes intersect to form a second square having a center corresponding to the center of the lamination, the second square being offset from the first square.

12. The lamination of claim 11, wherein the radially extending openings each define a first conductor portion, the first conductor portion being adapted to contain conductor material.

13. The lamination of claim 12, wherein the interior openings each define a tip portion, the tip portion being adapted to contain conductor material.

14. The lamination of claim 13, further defining a plurality of alignment openings.

7431 E

FIG 1
(PRIOR ART)

FIG 2
(PRIOR ART)

’ 7431 E

**FIG 3**

**FIG 4**

7431 E

FIG 5

FIG 6

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | PATENT ABSTRACTS OF JAPAN<br>vol. 7, no. 251 (E-209)(1396) 08 November 1983,<br>& JP-A-58 136258 (HITACHI)<br>* the whole document *<br>--- | 1-3,<br>5-14. | H02K21/46<br>H02K1/27 |
| Y | DE-A-2142466 (SIEMENS)<br>* page 2, line 5 - page 3, line 10; figures 1-3.<br>*<br>--- | 1-14. | |
| Y | EP-A-0072460 (SIEMENS-ALLIS)<br>* page 3, line 7 - page 10, line 11; figures<br>1-3. *<br>----- | 1-14. | |
| | | | TECHNICAL FIELDS SEARCHED (Int. Cl.5 )<br><br>H02K |

The present search report has been drawn up for all claims

| Place of search | Date of completion of the search | Examiner |
|---|---|---|
| THE HAGUE | 05 OCTOBER 1989 | TIO K.H. |